# EUROPEAN PATENT APPLICATION

(11) **EP 2 657 551 A1**
(43) Date of publication of application: **30.10.2013**
(21) Application number: 11850833.2
(22) Date of filing: 05.12.2011
(51) Int. Cl.: F16C 11/06, C01B 31/02

(54) **BALL JOINT**

(30) Priority: 24.12.2010 JP 2010288150
(71) Applicant: Honda Motor Co., Ltd., Minato-ku Tokyo 107-8556 (JP)
(72) Inventor: KOMORI Kentaro, Wako-shi Saitama 351-0193 (JP)
(74) Representative: Herzog, Markus
(86) International application number: PCT/JP2011/078045
(87) International publication number: WO 2012/086393

(57) **Abstract**

Provided is a ball joint having excellent wear resistance, corrosion resistance, and stability of sliding characteristics. A ball joint (1) according to the present invention includes: a ball stud (10) with a spherical surface section (11); and a resin seat (20) which holds and allows free rotation of the spherical surface section (11), wherein an amorphous hard carbon film with a hardness of 6 to 39 GPa is formed on the surface of the spherical surface section (11). In addition, in the ball joint (1) according to the present invention, the amorphous hard carbon film (DLC film) (12) preferably has a root mean square roughness of 60 nm or less. The resin seat (20) is preferably made of polyacetal, nylon, polyamide, polytetrafluoroethylene, polyether ether ketone, an elastomer, or a fiber-reinforced composite thereof.

## Description

### Technical Field

The present invention relates to a ball joint holding a freely rotating ball stud with a spherical surface section.

### Background Art

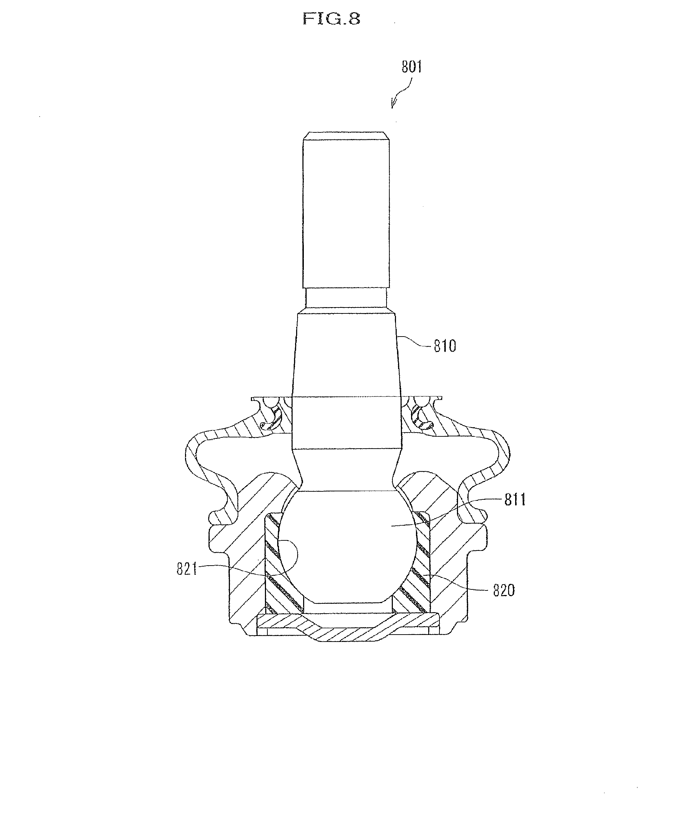

As illustrated in FIG. 8, a ball joint 801 includes: a ball stud 810 with a spherical surface section 811; and a resin seat 820 with a curved surface section 821 having a shape (curvature) fitted over this spherical surface section 811. In the ball joint 801 with such a configuration, the spherical surface section 811, which is held by the curved surface section 821 of the resin seat 820, can freely rotate and change its joint angle between the two members. Thus, the ball joint is very useful, so that it has been widely used for automobile chassis parts, specifically, a suspension, an arm, a tie rod, a steering mechanism, a link mechanism, a stabilizer, etc.

Various technologies on ball joints have long been researched and developed in order to improve maneuverability, ride comfort, steering feeling, safety, and/or durability of automobiles.
A technique for forming an Fe₂₋₃NC layer on an iron material by using carbonizing and nitriding treatments has been widely and commonly conducted.

Recently, Patent Literatures 1 and 2, for example, have disclosed a technique for improving a lubricant composition. Patent Literatures 3 and 4 have disclosed a technique regarding a seat (shell) material and structure. Patent Literatures 5 and 6 have disclosed a technique for producing an amorphous hard carbon film (DLC film) on at least one of a dust seal and a shaft member with which the dust seal comes into contact.
In addition, Non-Patent Literature 1 discloses a technique for depositing an Fe₃O₄ iron oxide (magnetite) layer on a spherical surface section of a ball stud.

### Citation List

### Patent Literature

Patent Literature 1: JP2003-20492A
Patent Literature 2: JP4199109B
Patent Literature 3: JP2004-538431A
Patent Literature 4: JP2005-535854A
Patent Literature 5: JP2006-300204A
Patent Literature 6: JP2005-83400A

### Non-Patent Literature

Non-Patent Literature 1 : Thomas auf dem Brinke, Jurgen Crummenauer, Rainer Hans, Werner Oppel, "Plasma-Assisted Surface Treatment (Nitriding, nitrocarburizing and oxidation of steel, cast iron and sintered materials)", 2006, p.39-40, [online]. verlag moderne industrie, Sulzer Metco. [retrieved on 2010-12-17]. Retrieved from the Internet: URL: http://thinfilm.sulzermetco.com/pdf/nitriding_gb.pdf.

### Summary of Invention

### Technical Problem

In the case of a common technique in which an Fe₂₋₃NC layer is formed and in the case of a technique in which a protective film is not formed on a spherical surface section of a ball stud as disclosed in Patent Literatures 1 to 6, however, grease primarily serves to achieve wear resistance, corrosion resistance, and stability of sliding behavior (e.g., torque behavior), all of which are sought for a ball joint. The grease is sensitive to an ambient temperature used, and also has poor tolerance for a flow out from a mechanism used and/or for deterioration over time. Unfortunately, this causes decreased wear resistance, corrosion resistance, and stability of torque behavior under practical conditions.

In addition, Non-Patent Literature 1 discloses a technique for creating a magnetite layer on a spherical surface section of a ball stud. This technique can achieve better wear resistance and corrosion resistance because of the magnetite layer. However, the sliding behavior of its joint portion is unstable, which is likely to induce a stick-slip phenomenon that their friction repeatedly causes stoppage and slippage.

The present invention has been made in light of the above problems. It is an object of the present invention to provide a ball joint having excellent wear resistance, corrosion resistance, and stability of sliding characteristics.

### Solution to Problem

In order to solve the above problems, an aspect of the present invention provides a ball joint including: a ball stud with a spherical surface section; and a resin seat which holds and allows free rotation of the spherical surface section, wherein an amorphous hard carbon film with a hardness of 6 to 39 GPa is formed on the surface of the spherical surface section.

If the amorphous hard carbon film has a hardness within the above specific range, the hardness of the amorphous hard carbon film is not excessively high. Consequently, this can reduce abrasion aggressiveness (also, referred to as aggressiveness toward partner materials) toward the resin seat by the amorphous hard carbon film at the time of sliding. This can also improve wear resistance. In addition, the hardness of the amorphous hard carbon film is not excessively low, which can prevent a loss of the amorphous hard carbon film due to abrasion. Further, the presence of the amorphous hard carbon film promotes excellent lubricity and corrosion resistance. As a result, this configuration can help produce a ball joint having excellent stability of sliding characteristics, corrosion resistance, and wear resistance between the amorphous hard carbon film and the resin seat.

In the present invention, the amorphous hard carbon film preferably has a root mean square roughness of 60 nm or less. This can set the surface roughness of the amorphous hard carbon film not to be excessively high, so that this is unlikely to damage the lubricity, corrosion resistance, and wear resistance between the amorphous hard carbon film and the resin seat even more. Because of the above, more stable sliding characteristics can be obtained.

In the present invention, the resin seat is preferably made of polyacetal, nylon, polyamide, polytetrafluoroethylene, polyether ether ketone, an elastomer, or a fiber-reinforced composite thereof. By using these components, more stable sliding characteristics can be definitely obtained because the resin seat has additional effects of elasticity and shock absorption.

### Advantageous Effects of Invention

The present invention can provide a ball joint having excellent wear resistance, corrosion resistance, and stability of sliding characteristics because the hardness of an amorphous hard carbon film is set to be within a specific range.

### Brief Description of Drawings

[FIG. 1] FIG. 1 is a cross-sectional view illustrating a ball joint according to an embodiment of the present invention.
[FIG. 2] FIG. 2 illustrates how a ball-on-disk friction and wear test looks like.
[FIG. 3] FIG. 3 is a bar graph illustrating wear rates of Examples 1 to 8 and Comparative Examples 1 to 4 shown in Table 2. In the graph, the ordinate represents a wear rate.
[FIG. 4] FIG. 4 is a graph in which a relationship between the hardness and the wear rates of Examples 1 to 8 and Comparative Examples 1 to 4 shown in Table 2 is plotted. In the graph, the abscissa represents a hardness [GPa], and the ordinate represents a wear rate.
[FIG. 5] FIG. 5 illustrates how a sliding behavior (torque behavior) test looks like.
[FIG. 6] FIG. 6 is a graph showing the results of the sliding behavior test using all-purpose grease with a low viscosity. In the graph, the abscissa represents a time [second], and the ordinate represents a torque [Nm].
[FIG. 7] FIG. 7 is a graph showing the results of the sliding behavior test using all-purpose grease with a high viscosity. In the graph, the abscissa represents a time [second], and the ordinate represents a torque [Nm].
[FIG. 8] FIG. 8 is a cross-sectional view illustrating a conventional ball joint.

### Description of Embodiments

It is an object of the present invention to provide an amorphous hard carbon film with a specific hardness on a spherical surface section of a ball stud to make sliding behavior (torque behavior) stably smooth at the time of sliding, thereby stabilizing sliding characteristics.

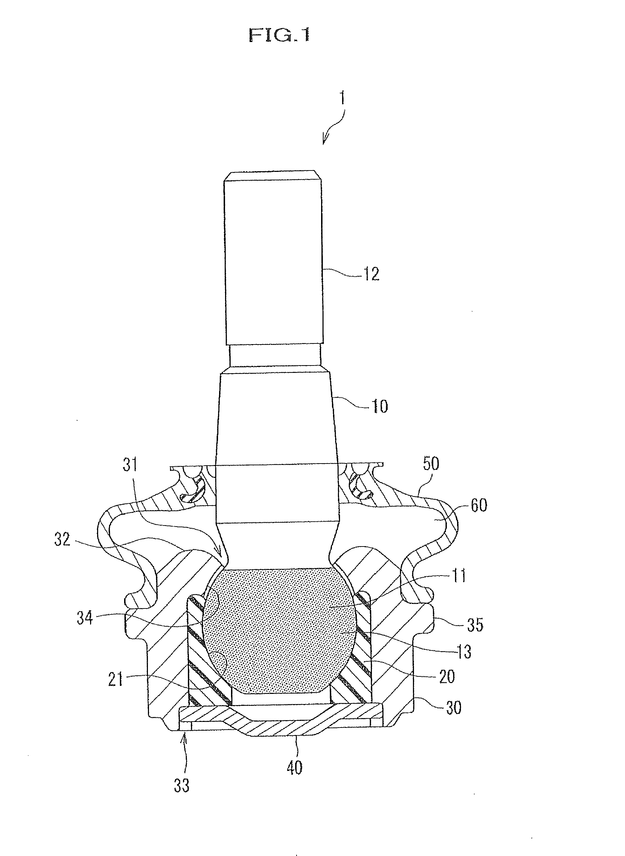

The following details ball joints according to embodiments of the present invention by referring to appropriate drawings.
As illustrated in FIG. 1, a ball joint 1 according to an embodiment of the present invention includes: a ball stud 10 with a spherical surface section 11; and a resin seat 20 which holds and allows free rotation of the spherical surface section 11. Specifically, the resin seat 20 has a curved surface section 21 with a shape (curvature) fitted over the spherical surface section 11 of the ball stud 10 and allows for a combination of making the curved surface section 21 come into contact with the spherical surface section 11 of the ball stud 10.

In an example of the ball stud 10 illustrated in FIG. 1 as an embodiment, the ball stud 10 and the resin seat 20 as so combined are placed so as to make a shaft member 12 of the ball stud 10 protrude from a first opening section 31 of a cylindrical housing 30. This opening section 31 has a bent section 32 formed by bending inward. The ball stud 10 and the resin seat 20 are inserted from a second opening section 33 of the housing 30. Next, the resin seat 20 stays at a position to come into contact with the inner side of the bent section 32. Then, the second opening section 33 is sealed with a plug 40 to fix them.

The housing 30 is mounted on automobile chassis parts such as a suspension, an arm, a tie rod, a steering mechanism, a link mechanism, and a stabilizer (not shown). Accordingly, the ball joint 1 according to an embodiment of the present invention can freely rotate by using the housing 30 (resin seat 20) mounted on the automobile chassis parts as a pivot because the curved surface section 21 of the resin seat 20 and the spherical surface section 11 of the ball stud 10 slide each other.

In addition, in an embodiment as illustrated in FIG. 1, the housing has a circumferential flange section 35. Also, a boot 50 is provided so as to cover a portion from this flange section 35 to a predetermined position of the shaft member 12 of the ball stud 10. In order to present no hindrance to movement of the ball stud 10, the boot 50 is made of an elastomer such as rubber and synthetic rubber. The inside thereof is filled with grease 60. Here, the above bent section 32 provides a small gap in such a degree that the bent section 32 does not directly contact the spherical surface section 11. The curved surface section 34 with a curved surface fitted to the spherical surface section 11 is formed all around its circumference. In view of the above, as the ball stud 10 rotates, the grease 60 is supplied to a space between the spherical surface section 11 of the ball stud 10 and the curved surface section 21 of the resin seat 20 from a gap between the spherical surface section 11 and the curved surface section 34. Consequently, their sliding can be smoothly operated. Note that the grease 60 used may not be particularly limited as long as the grease 60 is generally used for the ball joint 1.

In the ball joint 1 with such a configuration, an embodiment of the present invention provides an amorphous hard carbon film (hereinafter, simply referred to as the "DLC film") 13 with a hardness of 6 to 39 GPa on the surface of the spherical surface section 11 of the ball stud 10.
Providing the DLC film 13 with such a hardness can reduce abrasion aggressiveness against the resin seat 20 by the DLC film 13 during their sliding, and can suppress a wear loss of the DLC film 13. That is, as for the ball joint 1, its wear resistance is excellent and the lubricity and corrosion resistance of the DLC film 13 are not deteriorated. The sliding characteristics can therefore be superb.

When the DLC film 13 has a hardness of less than 6 GPa, the hardness of the DLC film is too low. Accordingly, sliding between the DLC film 13 and the curved surface section 21 of the resin seat 20 causes the DLC film 13 to wear away and disappear.
In contrast, when the hardness of the DLC film 13 exceeds 39 GPa, the hardness of the DLC film 13 is too high. Accordingly, its abrasion aggressiveness becomes higher and a wear volume of the resin seat 20, which is a partner member, increases.
Thus, the DLC film 13 should have a hardness of from 6 to 39 GPa. The hardness of the DLC film 13 is preferably from 9 to 29 GPa and more preferably from 9 to 21 GPa.

The hardness of the DLC film 13 has a good correlation with hydrogen content of the DLC film 13. Specifically, as the hydrogen content of the DLC film 13 increases, the hardness of the DLC film 13 tends to decrease. As the hydrogen content of the DLC film 13 decreases, the hardness of the DLC film 13 tends to increase. The hardness of the DLC film 13 should be within a range from 6 to 39 GPa. In that case, although somewhat depending on film formation conditions such as a raw material, a pressure, a film formation period, a bias voltage, and a plasma strength, the hydrogen content of the DLC film 13 may be about from 17 to 43 at% (% by atom).

Examples of the raw material for the DLC film 13 include hydrocarbon gas such as methane (CH₄), acetylene (C₂H₂), toluene (C₇H₈), benzene (C₆H₆), and tetramethylsilane (Si(CH₃)₄; TMS). In addition, plasma CVD (Chemical Vapor Deposition) using these raw materials can be suitably used as a film formation method for the DLC film 13. Note that it is obvious that a film formation method other than the plasma CVD can be used to form a film as long as the DLC film 13 preserves the above-described hardness. What kinds of techniques and conditions are used to form the DLC film 13 may be appropriately selected depending on the desired hardness. The DLC film 13 may contain, for example, Si (silicon), Ti (titanium), W (tungsten), or Cr (chromium). When any of these elements is contained, it is possible to control mechanical properties, such as the hardness and Young's modulus of the DLC film 13, and its surface structure at a nano level. It is also possible to regulate absorption of an additive component such as a wax component contained in the grease 60.

Note that the hardness and Young's modulus of the DLC film 13 can be determined by a nanoindentation method (using a nanoindenter) in accordance with ISO 14577, and can be accurately calculated.
In addition, the hydrogen content of the DLC film 13 can be measured by, for example, Rutherford backscattering spectrometry (RBS).

The surface roughness of the DLC film 13 is preferably a root mean square roughness (Rq) of 60 nm or less. When the root mean square roughness is 60 nm or less, the surface roughness of the DLC film 13 is not too high, so that the abrasion aggressiveness against the resin seat 20 by the DLC film 13 can be definitely suppressed. Accordingly, this can definitely help produce a ball joint 1 having excellent wear resistance.

The root mean square roughness (Rq) of the DLC film 13 can be measured with an atomic force microscope (AFM). The results obtained can be used to perform calculation according to JIS B0601:2001.

Film physical properties such as the hardness, Young's modulus, hydrogen content, surface roughness (e.g., root mean square roughness) of the DLC film 13 can be controlled by a combination among a type of raw material gas used, a device condition such as an applied bias voltage, and a film formation period. For example, when CH₄, C₂H₂, C₆H₆, C₇H₈, or TMS is used as the raw material gas, their setting can be optionally adjusted to a pressure of 0.1 to 9.0 Pa, a bias voltage of the spherical surface section 11 of 400 to 2000 V, a plasma output of 20 to 200 W, and a film formation period of 15 to 240 min.

The resin seat 20 may suitably employ those produced by using polyacetal, nylon, polyamide, polytetrafluoroethylene, polyether ether ketone, an elastomer, or a fiber-reinforced composite thereof. The resin seat as so produced using materials selected from the above can achieve excellent elasticity and shock absorption. Note that as long as a desired effect of the present invention is exerted, the resin seat 20 can employ those produced using another resin or fiber-reinforced composite.

Steel materials including common steel and special steel are preferably used for an element member such as the ball stud 10, the housing 30, and the plug 40. The member, however, may be made of non-iron metals or ceramics.

Examples of the common steel can include those specified in Japanese Industrial Standards (JIS) such as a rolled steel for general structure (SS material), a rolled steel for welded structure (SM material), a steel for a boiler and pressure vessel (SB material), a steel and steel strip for a high-pressure gas vessel (SG material), a hot-rolled steel and steel strip (SPH material), a hot-rolled carbon steel strip for a steel pipe (SPHT material), a hot-rolled steel plate and steel strip for automobile structure (SAPH material), and a cold-rolled steel plate and steel strip (SPC material).

Preferable examples of the special steel can include a high carbon chromium bearing steel (SUJ2 material), a chromium steel (SCr material), a chromium molybdenum steel (SCM material), and a nickel chromium molybdenum steel (SNCM). Other examples can include a carbon steel for machine construction (S-C material), a carbon tool steel (SK material), an alloy tool steel for a cutter (SKS material), an alloy tool steel for a cold die (SKD material), an alloy tool steel for a hot mold (SKT material), a highspeed tool steel (SKH material), a carbon chromium bearing steel (SUJ material), a spring steel (SUP material), a stainless steel (SUS material), a heat-resistant steel (SUH material), a carbon steel for a constant-temperature pressure vessel (SLA material), a magnetic core steel, a magnet steel, a steel forging (SF material), a steel casting (SC material), and an iron casting (FC material).

Examples of the non-iron metal can include aluminum, magnesium, titanium, or alloys containing as a chief ingredient any one selected therefrom.

Examples of aluminum or the aluminum alloys can include those specified in JIS such as pure Al (1000 series), Al-Cu or Al-Cu-Mg series alloys (2000 series), Al-Mn or Al-Mn-Mg series alloys (3000 series), Al-Si-Cu-Mg-Ni or Al-Si series alloys (4000 series), Al-Mg series alloys (5000 series), an Al-Cu alloy (AClA), an Al-Cu-Mg alloy (AC1B), an Al-Cu-Mg-Ni alloy (AC5A), Al-Si alloys (AC3A, ADC1), Al-Cu-Si alloys (AC2A, AC2B), Al-Si-Cu alloys (AC4B, ADC10, ADC12), Al-Si-Mg alloys (AC4C, AC4CH, ADC3), Al-Si-Cu-Mg-Ni alloys (AC8A, AC8B, AC8C, AC9A, AC9B, ADC14), and Al-Mg alloys (AC7A, ADC5, ADC6).

Examples of magnesium or the magnesium alloys can include seven series specified in JIS.
Examples of titanium or the titanium alloys can include four series specified in JIS.

The ball stud 10, the housing 30, and the plug 40 may be made of the above materials which have been appropriately selected depending on their purposes. That is, the ball stud 10, the housing 30, and the plug 40 may be made of the same material as selected from the above material or may be made of different materials.

### Examples

The following describes Examples that have demonstrated advantageous effects of the present invention.
Examples 1 to 8 and Comparative Examples 1 to 4 were produced by forming a DLC film on the surface of a ball member with a diameter of ϕ6 mm, which ball member was made of an SUJ2 material, in accordance with conditions designated in Table 1. Note that Comparative Example 1 did not have a DLC film formed thereon. In Table 1, C₂H₂ denotes acetylene, C₆H₆ denotes benzene, C₇H₈ denotes toluene, and TMS denotes tetramethylsilane.

**Table 1**

| | Film Formation Method | Raw Material Gas | Pressure [Pa] | Film Formation Period [min] | Bias Voltage [V] | Plasma Output (W) or Arc Voltage (V) |
|---|---|---|---|---|---|---|
| Example 1 | Plasma CVD | C₂H₂ | 0.4 | 60 | 2000 | 20 W |
| Example 2 | Plasma CVD | C₆H₆ | 0.1 | 120 | 2000 | 20 W |
| Example 3 | Plasma CVD | TMS | 0.1 | 120 | 2000 | 20 W |
| Example 4 | Plasma CVD | TMS | 0.4 | 240 | 2000 | 20 W |
| Example 5 | Plasma CVD | C₇H₈ | 2.3 | 27 | 500 | 200 W |
| Example 6 | Plasma CVD | C₇H₈ | 2.3 | 110 | 500 | 200 W |
| Example 7 | Plasma CVD | C₇H₈ | 4.2 | 60 | 430 | 68 W |
| Example 8 | Plasma CVD | C₇H₈ | 4.9 | 18 | 400 | 150 W |
| Comparative Example 1 | DLC film was not formed | | | | | |
| Comparative Example 2 | Plasma CVD | C₇H₈ | 8.9 | 17 | 400 | 150 W |
| Comparative Example 3 | Ion Vapor Deposition | Solid Carbon | 10⁻³ or less | 150 | 100 | 100 V |
| Comparative Example 4 | Arc Vapor | Solid | 10⁻³ or | 130 | 100 | 100 V |
| | Deposition | Carbon | less | | | |

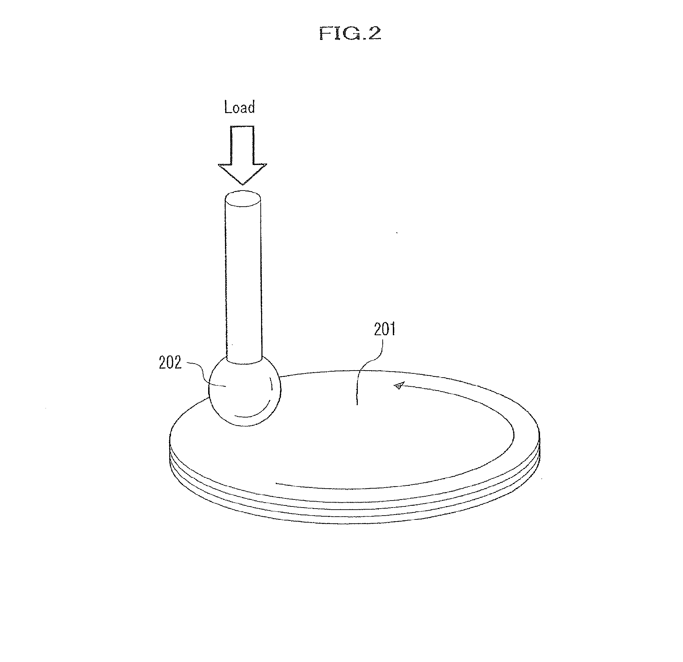

A ball-on-disk friction and wear test as illustrated in FIG. 2 was conducted by using a ball member according to any of Examples 1 to 8 and Comparative Examples 1 to 4 indicated in Table 1 and a circular disk member as manufactured using polyacetal.
As illustrated in FIG. 2, the ball-on-disk friction and wear test was carried out under conditions in which grease was applied on a surface of a polyacetal-made disk member 201; and a ball member 202 with ϕ6 mm was given a load of 5 N at a sliding speed of 1 mm/sec, a temperature of 25°C, and a cycle of 5000.

After completion of the test, the surface of each of the disk member 201 and the ball member 202 was observed to examine a wear rate of the disk member 201 and a condition of the DLC film on the surface of the ball member 202. Also, a hydrogen content [at%], a root mean square roughness [nm], a Young's modulus [GPa], a hardness [GPa] of the DLC film formed were measured. Table 2 lists the values together with the above. Note that the "-" in Table 2 indicates the fact that since there was no DLC film of measurement subject, their measurement was not performed.

**Table 2**

| | Hydrogen Content [at%] | Root Mean Square Roughness [nm] | Young's Modulus [GPa] | Hardness [GPa] | Wear Rate | Remarks |
|---|---|---|---|---|---|---|
| Example 1 | 17 | 10 | 275 | 29 | 1.36 | |
| Example 2 | 21 | 21 | 314 | 39 | 1.59 | |
| Example 3 | 30 | 39 | 224 | 20 | 1.14 | DLC film contains 26 at% of Si |
| Example 4 | 31 | 60 | 142 | 16 | 1.36 | DLC film contains 22 at% of Si |
| Example 5 | 29 | 5 | 168 | 21 | 1.45 | |
| Example 6 | 34 | 18 | 65 | 9 | 1.00 | |
| Example 7 | 36 | 10 | 97 | 13 | 1.50 | |
| Example 8 | 43 | 6 | 45 | 6 | 0.59 | |
| Comparative Example 1 | - | - | 230 | 3 | 1.00 | Set as a reference for a wear rate |
| Comparative Example 2 | 47 | 5 | 41 | 5 | 0.91 | DLC film was lost due to abrasion |
| Comparative Example 3 | 3 | 18 | 546 | 51 | 5.23 | |
| Comparative Example 4 | 0 | 31 | 706 | 70 | 5.32 | |

The hydrogen content designated in Table 2 was determined by Rutherford backscattering spectrometry (RBS). In the RBS, a sample was irradiated with an helium (He) ion. The hydrogen content, in particular, was calculated using the results obtained by detecting hydrogen which had rebounded and scattered forward.
In calculation of the root mean square roughness, an area having a side of from 20 µm to 50 µm was inspected with an atomic force microscope (AFM), and the results obtained were used for the calculation according to JIS B0601:2001.
The Young's modulus and the hardness were measured with a nanoindenter in accordance with ISO 14577.
The wear rate was determined with a surface roughness meter by measuring a depth of sliding defects created on the surface of the disk member 201 (see FIG. 2) by the ball-on-disk friction and wear test. The wear amount of Comparative Example 1 was set to 1.00. Then, their relative amount was designated as a wear rate. In addition, the surface of the ball member 202 (see FIG. 2) was observed with a light microscope, and whether or not the abrasion causes a loss of the DLC film was examined.

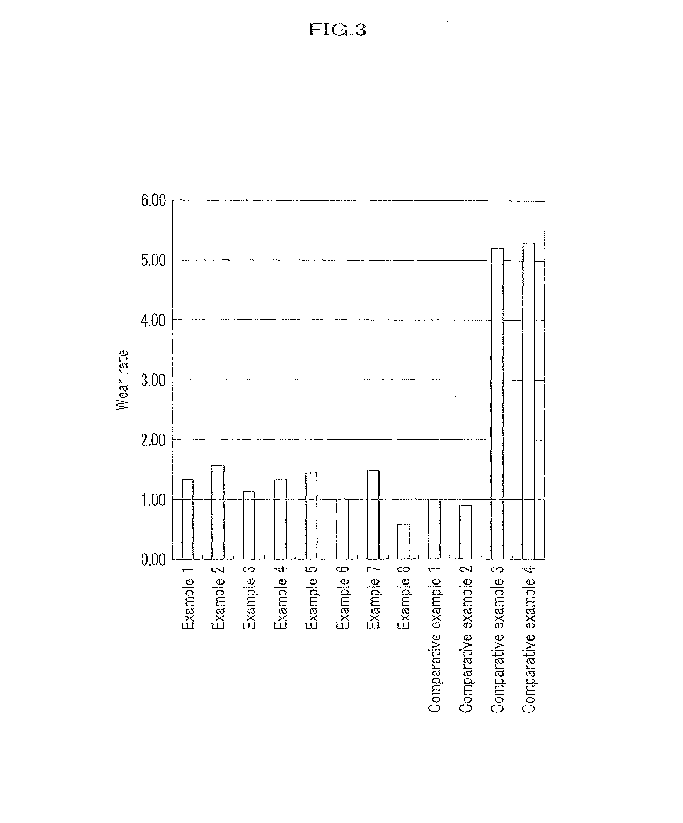

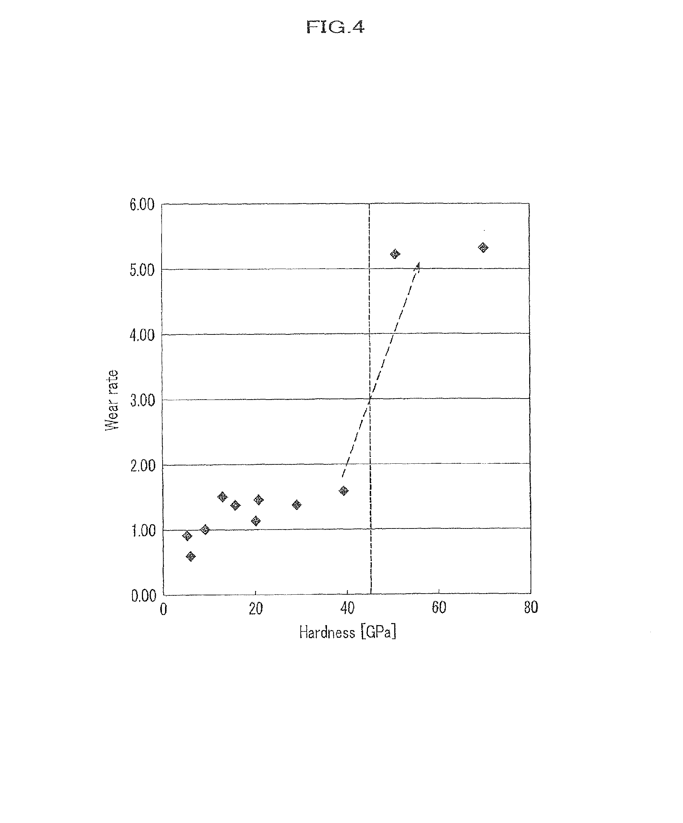

As demonstrated in Table 2 and FIG. 3, each hardness of the DLC films of Comparative Examples 3 and 4 was too high, so that the wear amount of the disk member 201 increased. When compared with Comparative Example 1, their wear rate (i.e., a wear amount) was 5 times or higher.
As it is evident from Table 2 and FIG. 4, the DLC film had a hardness of 40 to 50 GPa (i.e., Comparative Examples 3 and 4) as a threshold. The wear rate steeply rose above the threshold.
Comparative Example 2 had substantially the same good wear rate of the disk member 201 as Comparative Example 1. Because the hardness of the DLC film was too low, the DLC film formed on the surface of the ball member 202 disappeared in the ball-on-disk friction and wear test.

In contrast, any of Examples 1 to 8 had a good wear rate. In addition, the DLC film on the surface of the ball member 202 was not lost in the ball-on-disk friction and wear test.
From the results of Examples 1 to 8 and Comparative Examples 2 to 4, the hardness of the DLC film should be from 6 to 39 GPA, which was a requirement for the present invention.
In addition, it was found from Example 4 that if the root mean square roughness of the DLC film was about 60 nm or less, a better wear rate was able to be definitely obtained.

Next, the sliding behavior (torque behavior) was determined using a ball stud having a DLC film formed on a spherical surface section under conditions of Examples 1 to 8. Note that in the following description, the ball studs having a DLC film formed on a spherical surface section under conditions of Examples 1 to 8 are referred to as Examples 1 to 8.

First, the sliding behavior was determined when all-purpose grease with a low viscosity was used. For the determination, a DLC film was formed in accordance with the conditions designated in Examples 1 to 8 of Table 1 on the spherical surface section of the ball stud as manufactured using an SCM material. Cranoc Compound FL, manufactured by Nippon Oil Corporation, was applied, as all-purpose grease with a low viscosity, on the spherical surface section of the ball stud, the section being coated with the DLC film. A polyacetal-made seat was made to come into contact with the section and was built in a housing to produce a ball joint for a sliding behavior test.

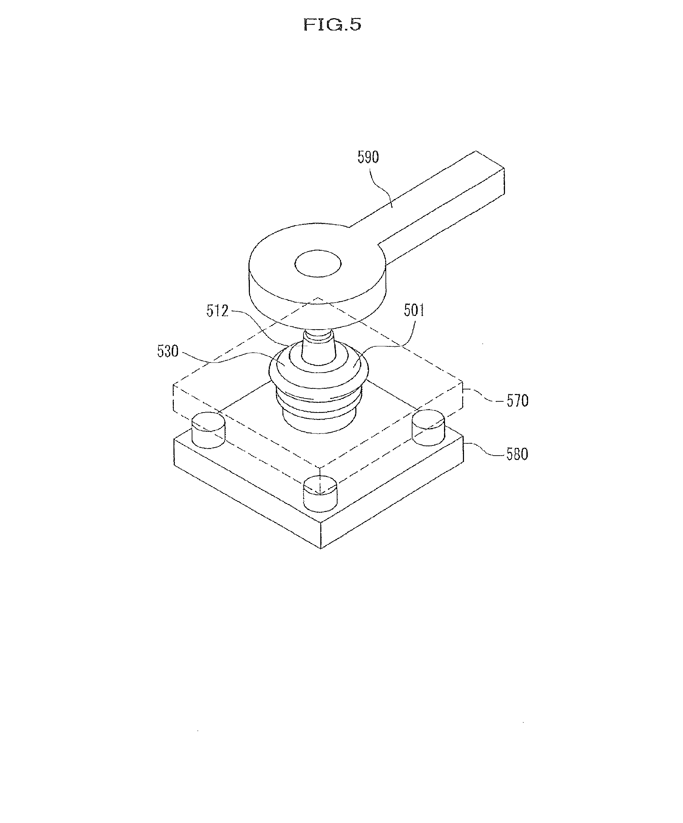

As depicted in FIG. 5, a prefabricated housing 530 of a ball joint 501 for the sliding behavior test was interposed and fixed between a plate member 570 denoted by a dashed line and a plate member 580 denoted by a solid line in the figure. Note that the plate member 570 denoted by a dashed line had a hole section (not shown) to make a shaft member 512 of the ball stud 501 project therethrough. Indeed, the shaft member 512 of the ball stud 501 projected through this hole section.
A torque wrench 590 was attached to the shaft member 512 projecting from the plate member 570. Then, the torque wrench 590 was made to revolve to determine the torque behavior. Note that the determination was carried out under an ambient temperature of 25°C, and the torque wrench 590 was rotated at a rotation speed of 5 degrees/second for 25 to 30 seconds.

Note that for comparison, a ball stud according to Comparative Example 5 was manufactured which had a spherical surface section (see reference sign 811 in FIG. 8) having a magnetite layer with a thickness of about 2 µm. A ball joint 501 was produced in substantially the same manner as in the above Examples 1 to 8. Likewise, two plate members 570 and 580 were also used for mounting. Then, the torque wrench 590 was used to determine the torque behavior under the same conditions as above.

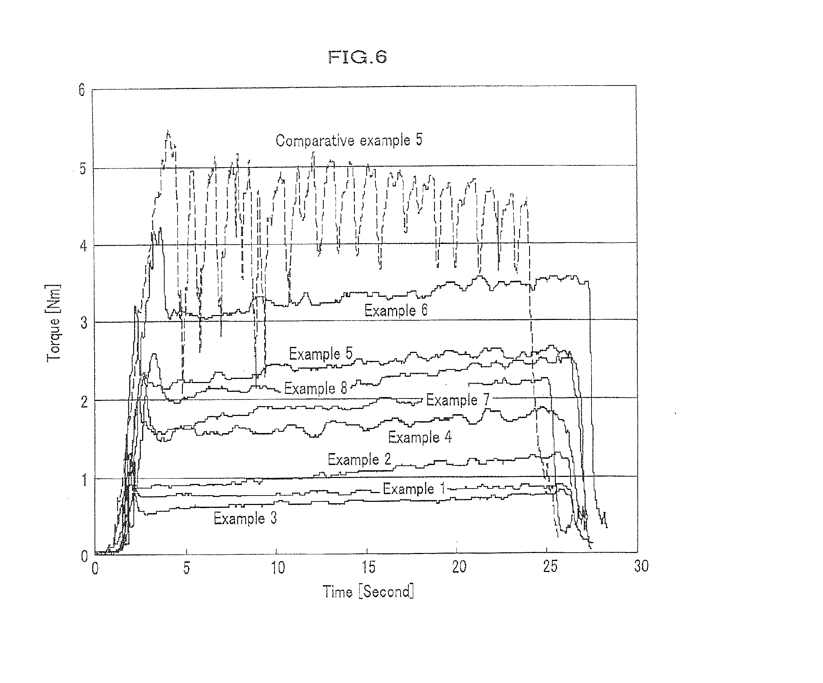

As a result, FIG. 6 demonstrated that while Examples 1 to 8 exhibited stable torque behavior during the entire time course, the torque behavior of Comparative Example 5 fluctuated dramatically and was thus unstable.

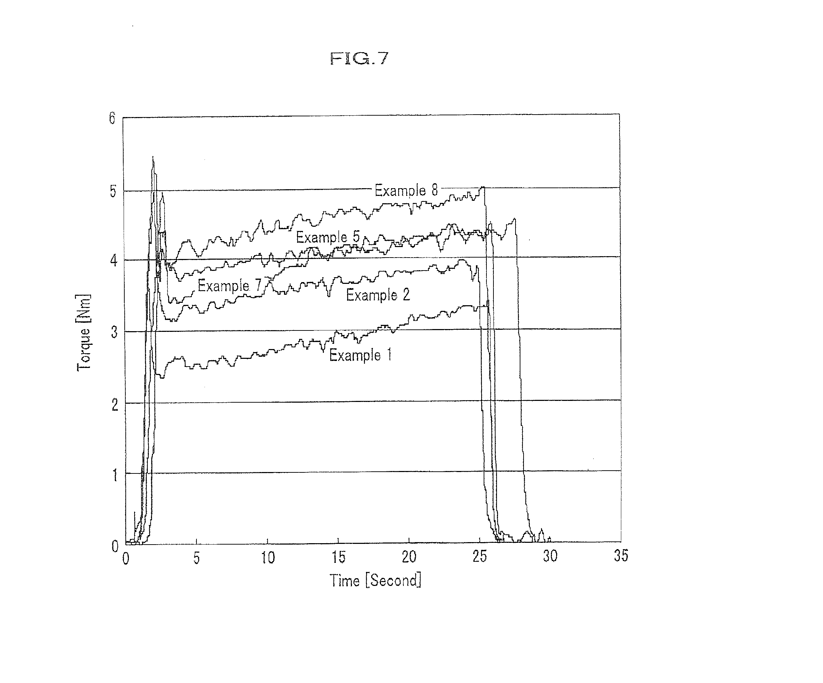

Examples 1, 2, 5, 7, and 8 having a different hardness of the DLC film were selected from the Examples. Then, all-purpose grease with a high viscosity was used to perform a sliding behavior test in a manner similar to the sliding behavior test using the all-purpose grease with a low viscosity. FIG. 7 shows the results. Note that LIPANOC DX 2, manufactured by Nippon Oil Corporation, was used as the all-purpose grease with a high viscosity.
As illustrated in FIG. 7, any of Examples 1, 2, 5, 7, and 8, whose hardness of the DLC film was within a range from 6 to 39 GPa, exhibited stable torque behavior during the entire time course of the sliding test.

As described above, the ball joint includes: a ball stud with a spherical surface section; and a resin seat which holds and allows free rotation of the spherical surface section. Providing an amorphous hard carbon film with a hardness of 6 to 39 GPa on the surface of the spherical surface section makes it possible to realize a ball joint having excellent corrosion resistance, a lower wear rate, and superb stability of sliding behavior (torque behavior), that is, to realize a ball joint having excellent wear resistance and stability of sliding characteristics.
In addition, it has been found that if the root mean square roughness of the amorphous hard carbon film is equal to or less than 60 nm, it is possible to more definitely produce the above ball joint having excellent wear resistance, corrosion resistance, and stability of sliding characteristics.
Further, although a polyacetal-made disk member has been used as a resin seat in the above Examples, it is strongly suggested that substantially the same effects can be exerted regarding seats, which are equivalent to the polyacetal-made one, as produced using nylon, polyamide, polytetrafluoroethylene, polyether ether ketone, an elastomer, or a fiber-reinforced composite thereof, all of which have been generally used under the similar conditions.

### Reference Signs List

- 1: Ball joint
- 10: Ball stud
- 11: Spherical surface section
- 12: Shaft member
- 13: Amorphous hard carbon film (DLC film)
- 20: Resin seat
- 21: Curved surface section
- 30: Housing
- 31: Opening section
- 32: Bent section
- 33: Opening section
- 34: Curved surface section
- 35: Flange section
- 40: Plug
- 50: Boot
- 60: Grease

## Claims

1. A ball joint comprising:
a ball stud with a spherical surface section; and
a resin seat which holds and allows free rotation of the spherical surface section,
wherein an amorphous hard carbon film with a hardness of 6 to 39 GPa is formed on the surface of the spherical surface section.

2. The ball joint according to Claim 1, wherein the amorphous hard carbon film has a root mean square roughness of 60 nm or less.

3. The ball joint according to Claim 1 or 2, wherein the resin seat is made of polyacetal, nylon, polyamide, polytetrafluoroethylene, polyether ether ketone, an elastomer, or a fiber-reinforced composite thereof.
